# EUROPEAN PATENT APPLICATION

(11) **EP 3 175 966 A1**
(43) Date of publication of application: **07.06.2017**
(21) Application number: 16162406.9
(22) Date of filing: 24.03.2016
(51) Int. Cl.: B29C 45/20, B29C 33/04, B29C 45/27

(54) **AIR-COOLED SPRUE BUSH FOR MOLD**

(30) Priority: 01.12.2015 TW 104140074
(71) Applicant: Taiwan Additive Manufacturing Corporation, Taichung City (TW)
(72) Inventor: Wu, Chih-Meng, Miaoli County (TW)
(74) Representative: Lang, Christian

(57) **Abstract**

An air-cooled sprue bush (100) is mounted on a mold (200) and contains: a columnar runner body (10) and a flange portion (20). The runner body (10) includes a gate (11) and a cooling path (30) defined in the runner body (10), the cooling path (30) has plural U-shaped channels (31) annularly arranged around the cooling path (30), and each U-shaped channel (31) has a mesh structure formed therein. The flange portion (20) is fixed on the runner body (10) so as to contact with an outer face (201) of the mold (200), and the gate (11) passes through the flange portion (20) and has a feeding orifice (12) formed in the flange portion (20). The flange portion (20) also includes at least one inlet (21) and at least one outlet (22) which are in communication with the cooling path (30) of the runner body (10) and do not contact with the mold (200), such that external gas flows out of the at least one outlet (22) from the at least one inlet (21) via the cooling path (30).

## Description

### FIELD OF THE INVENTION

The present invention relates to a sprue bush for a mold, and more particularly to an air-cooled sprue bush for the mold which has brilliant cooling and leakproof effect.

### BACKGROUND OF THE INVENTION

To decrease molding time in an injection molding process, at least one opening is formed in a mold so as to define a cooling path, such that heat conducts in the mold evenly, and plastic material is molded and cooled.

A conventional sprue bush for a mold does not contain a cooling path, so it molds a finished product slowly and unstably. To overcome such a problem, an improved sprue bush contains a cooling path so that a melting material is fed in a gate and is cooled quickly, and the finished product is molded completely. The conventional sprue bush is disclosed in TW Pub. No. I410319 and contains a cooling path arranged around a gate of a runner body so that after the melting material is injection molded into the mold, coolant in the cooling path cools the sprue bush and the melting material, thus enhancing production efficiency and molding stably.

However, the cooling path is arranged in a C shape in the sprue bush, so it is machined difficultly, and an outlet and an inlet of the runner body correspond to a water discharging passageway and a water supply passageway, hence the runner body and the mold are connected troublesomely.

Furthermore, the runner body and the mold connect on a bottom of a flange portion, so the flange portion is broken easily after using a period of time and the coolant leaks out of the runner body to deteriorate the finished product.

The present invention has arisen to mitigate and/or obviate the afore-described disadvantages.

### SUMMARY OF THE INVENTION

The primary objective of the present invention is to provide an air-cooled sprue bush for a mold which has brilliant cooling and leakproof effect.

Further objective of the present invention is to provide an air-cooled sprue bush for a mold in which a cooling path is pressurized to break vacuum in the cooling path and to decrease deformation of a finish product, as releasing the mold.

Another objective of the present invention is to provide an air-cooled sprue bush for a mold which as feeding a melting material, an external gas does not flow in the cooling path so as to preserve the cooling effect.

To obtain the above objectives, an air-cooled sprue bush for the mold provided by a preferred embodiment of the present invention contains: a columnar runner body and a flange portion.

The runner body is columnar and includes a gate and a cooling path defined in the runner body, the cooling path has a plurality of U-shaped channels annularly arranged around the cooling path, and each U-shaped channel has a mesh structure formed in said each U-shaped channel.

The flange portion is fixed on the runner body so as to contact with an outer face of the mold, and the gate passes through the flange portion and has a feeding orifice formed in the flange portion, the flange portion includes at least one inlet and at least one outlet which are in communication with the cooling path of the runner body and do not contact with the mold, such that external gas flows out of the at least one outlet from the at least one inlet via the cooling path.

### BRIEF DESCRIPTION OF THE DRAWINGS

FIG. 1 is a perspective view showing the assembly of an air-cooled sprue bush for a mold according to a preferred embodiment of the present invention.
FIG. 2 is a cross sectional view taken along the line 2-2 of FIG. 1.
FIG. 3 is a cross sectional view taken along the line 3-3 of FIG. 1 and showing the air-cooled sprue bush in a longitudinal direction.
FIG. 4 is a cross sectional view taken along the line 4-4 of FIG. 1 and showing a connection section of each U-shaped channel.
FIG. 5 is a cross sectional view taken along the line 5-5 of FIG. 1 and showing a first section and a second section of said each U-shaped channel.
FIG. 6 is a cross sectional view showing said each U-shaped channel being parallel to a gate in a cone shape.

### DETAILED DESCRIPTION OF THE PREFERRED EMBODIMENTS

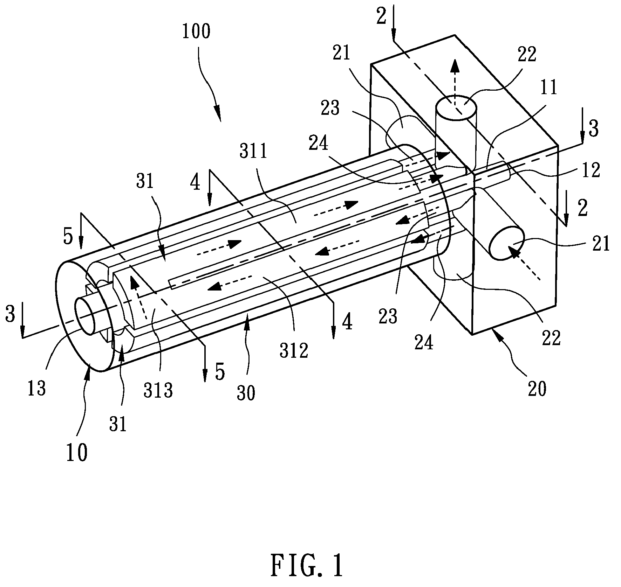

With reference to FIGS. 1 to 3, an air-cooled sprue bush 100 according to a preferred embodiment of the present invention is mounted on a mold 200 so that a melting material is fed into the mold 200 in an injection molding process. The sprue bush 100 comprises: a runner body 10 and a flange portion 20.

The runner body 10 is columnar and includes a gate 11 and a cooling path 30 defined in the runner body 10. The cooling path 30 has a plurality of U-shaped channels 31 annularly arranged therearound, and each U-shaped channel 31 has a mesh structure formed therein.

The flange portion 20 is fixed on the runner body 10 so as to contact with an outer face 201 of the mold 200, and the gate 11 passes through the flange portion 20 and has a feeding orifice 12 formed in the flange portion 20. The flange portion 20 includes at least one inlet 21 and at least one outlet 22 which are in communication with the cooling path 30 of the runner body 10 and do not contact with the mold 200, such that external gas flows out of the at least one outlet 22 from the at least one inlet 21 via the cooling path 30.

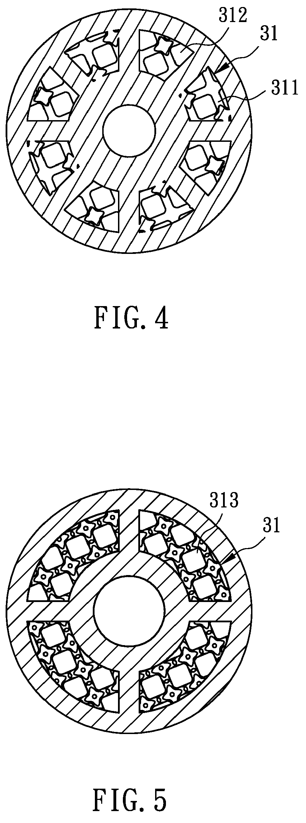

In this embodiment, the flange portion 20 includes two inlets 21 and two outlets 22. Said each U-shaped channel 31 has a first section 311, a second section 312, and a connection section 313 connected with and between the first section 311 and the second section 312. Each inlet 21 and each outlet 22 of the flange portion 20 communicate with a first runner 23 and a second runner 24, wherein the first runner 23 is in communication with the second section 312 of said each U-shaped channel 31, and the second runner 24 is in communication with the first section 311 of said each U-shaped channel 31 so as to form the cooling path 30. Referring to FIG. 4, a horizontal cross section of the first section 311 of said each U-shaped channel 31 is in a sector shape, and a horizontal cross section of the second section 312 of said each U-shaped channel 31 is in a sector shape. As shown in FIG. 5, a cross section of the connection section 313 of said each U-shaped channel 31 is in a sector shape.

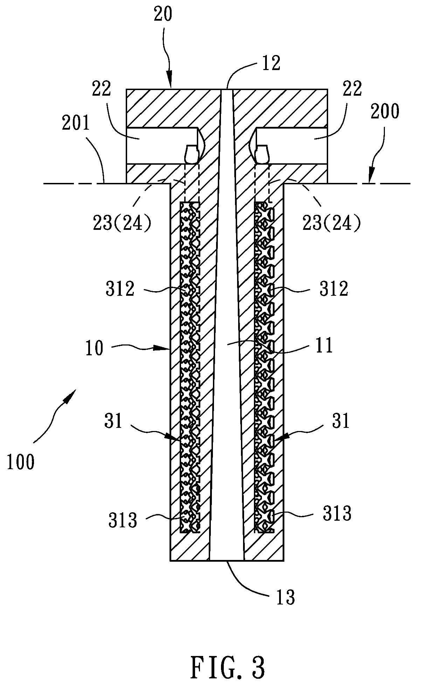

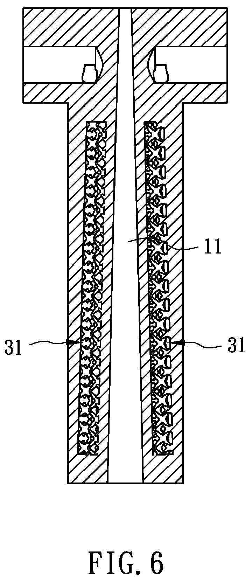

As illustrated in FIGS. 1 and 3, the gate 11 of the runner body 10 is in a cone shape, and a diameter of the feeding orifice 12 increases from a first end of the feeding orifice 12 adjacent to the flange portion 20 to a second end of the feeding orifice 12 which connects with a spout 13 of the gate 11, hence a diameter of the spout 13 of the gate 11 is more than the feeding orifice 12, and a longitudinal cross section of said each U-shaped channel 31 is straight, such that said each U-shaped channel 31 is not parallel to the gate 11 in the cone shape. With reference to FIG. 6, the longitudinal cross section of said each U-shaped channel 31 is tilted so that said each U-shaped channel 31 is parallel to the gate 11 in the cone shape and spaces a distance from the gate 11, thus obtaining an even cooling effect of the plurality of U-shaped channels 31.

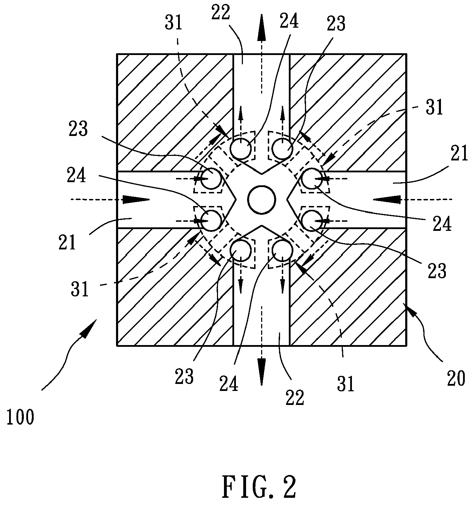

Referring to FIGS. 1 and 2, as feeding the melting material, the external gas is fed into the cooling path 30 of the runner body 10 and flows out of the at least one outlet 22 of the flange portion 20 from the at least one inlet 21 via the first runner 23, the second runner 24, the second section 312 and the first section 311 of said each U-shaped channel 31. Preferably, the cooling path 30 is vacuumed so that the external gas does not flow in the cooling path 30 to preserve the cooling effect, cool the melting material quickly, and reduce a molding time in the injection molding process.

As releasing the mold 200, the cooling path 30 is pressurized to break vacuum in the cooling path 30 and to decrease deformation of a finish product.

Preferably, the at least one inlet 21 and the at least one outlet 22 of the flange portion 20 do not connect with a water passageway of the mold 200, and the external gas cools the air-cooled sprue bush 100, so water leakage from the air-cooled sprue bush 100 is overcome. The cooling path 30 of the runner body 10 surrounds the gate 11, and the external gas cools the air-cooled sprue bush 100 since the external gas evenly flows in said each U-shaped channel 31 and the gate 11. In addition, the cooling path 30 is vacuumed so that the melting material is cooled quickly, and the molding time in the injection molding process is reduced. The cross sections of the first section 311, the second section 312, and the connection section 313 of said each U-shaped channel 31 are in a sector shape, respectively, so as to increase cooling area. Preferably, as releasing the mold, the cooling path 30 is pressurized to break vacuum in the cooling path 30 and to decrease deformation of the finish product.

It is to be noted that numbers of the at least one inlet 21 and the at least one outlet 22 of the flanges 20 are respectively changeable based on using requirements.

## Claims

1. An air-cooled sprue bush (100) being mounted on a mold (200) and comprising:
a runner body (10) being columnar and including a gate (11) and a cooling path (30) defined in the runner body (10); and
a flange portion (20) fixed on the runner body (10) so as to contact with an outer face (201) of the mold (200), and the gate (11) passing through the flange portion (20) and having a feeding orifice (12) formed in the flange portion (20), the flange portion (20) including at least one inlet (21) and at least one outlet (22) which are in communication with the cooling path (30) of the runner body (10), such that external gas flows out of the at least one outlet (22) from the at least one inlet (21) via the cooling path (30);
**characterized in that**
the cooling path (30) has a plurality of U-shaped channels (31) annularly arranged around the cooling path (30), and each U-shaped channel (31) has a mesh structure formed in said each U-shaped channel (31);
the at least one inlet (21) and the at least one outlet (22) do not contact with the mold (200).

2. The air-cooled sprue bush (100) as claimed in claim 1, wherein the flange portion (20) includes two inlets (21) and two outlets (22).

3. The air-cooled sprue bush (100) as claimed in claim 1, wherein said each U-shaped channel (31) has a first section (311), a second section (312), and a connection section (313) connected with and between the first section (311) and the second section (312); the at least one inlet (21) and the at least one outlet (22) of the flange portion (20) communicate with a first runner (23) and a second runner (24), wherein the first runner (23) is in communication with the second section (312) of said each U-shaped channel (31), and the second runner (24) is in communication with the first section (311) of said each U-shaped channel (31) so as to form the cooling path (30).

4. The air-cooled sprue bush (100) as claimed in claim 3, wherein a horizontal cross section of the first section (311) of said each U-shaped channel (31) is in a sector shape, and a horizontal cross section of the second section (312) of said each U-shaped channel (31) is in a sector shape.

5. The air-cooled sprue bush (100) as claimed in claim 3, wherein a cross section of the connection section (313) of said each U-shaped channel (31) is in a sector shape.

6. The air-cooled sprue bush (100) as claimed in claim 1, wherein the gate (11) of the runner body (10) is in a cone shape, and a diameter of the feeding orifice (12) increases from a first end of the feeding orifice (12) adjacent to the flange portion (20) to a second end of the feeding orifice (12) which connects with a spout (13) of the gate (11), and a diameter of the spout (13) of the gate (11) is more than the feeding orifice (12).

7. The air-cooled sprue bush (100) as claimed in claim 1, wherein the cooling path (30) is vacuumed so that the external gas does not flow in the cooling path (30) as feeding a melting material into the mold (200) in an injection molding process.

8. The air-cooled sprue bush (100) as claimed in claim 1, wherein a longitudinal cross section of said each U-shaped channel (31) is straight, and said each U-shaped channel (31) is not parallel to the gate (11) in a cone shape.

9. The air-cooled sprue bush (100) as claimed in claim 1, wherein a longitudinal cross section of said each U-shaped channel (31) is tilted, and said each U-shaped channel (31) is parallel to the gate (11) in a cone shape.
